# EUROPÄISCHE PATENTSCHRIFT

(11) **EP 0 864 515 B1**
(45) Veröffentlichungstag und Bekanntmachung des Hinweises auf die Patenterteilung: **19.07.2000**
(21) Anmeldenummer: 98102577.8
(22) Anmeldetag: 14.02.1998
(51) Int. Cl.: B65G 59/04, B65H 3/08

(54) **Vorrichtung zum Vereinzeln von aufgestapelten scheibenförmigen Datenträgern, insbesondere CD's**
Device for de-stacking disc shaped record carriers especially CD's
Dispositif pour désempiler des supports d'information en forme de disques et plus particulièrement des CD

(30) Priorität: 15.03.1997 DE 29704755 U
(43) Veröffentlichungstag der Anmeldung: 16.09.1998
(73) Patentinhaber: Pfankuch Maschinen GmbH, 22926 Ahrensburg (DE)
(72) Erfinder: Pfankuch, Claus Karl, 22359 Hamburg (DE)
(74) Vertreter: von Raffay, Vincenz, Dipl.-Ing.

(56) Entgegenhaltungen:
- EP-A- 0 231 534
- EP-A- 0 454 161
- DE-A- 4 202 379
- US-A- 3 409 149
- US-A- 4 024 963

## Beschreibung

Die Erfindung betrifft eine Vorrichtung nach dem Oberbegriff des Anspruches 1.

Es sind Vorrichtungen der vorstehend genannten Art bekannt (siehe z.B. EP-A-454 161). Die Datenträger, d.h. die CD's, in diesen bekannten Vorrichtungen, werden auf Produktstangen gestapelt und in diesen Stapeln von Verarbeitungsgang zu Verarbeitungsgang bewegt. Zum Vereinzeln wird die obenliegende CD in einem Stapel mit Saugnäpfen angehoben und durch eine Schwenkbewegung um 180° einer Weiterverarbeitung zugefördert. Nach Vollenden der Schwenkbewegung wird die CD mit der datentragenden Seite nach unten auf die Weiterverarbeitungseinrichtung abgelegt. Hierdurch besteht die Gefahr, daß die empfindliche, datentragende Seite beschädigt wird. Zur Erreichung einer ausreichenden Verarbeitungsgeschwindigkeit hat der Schwenkarm bei diesen bekannten Vorrichtungen zwei gegenüberliegende Positionen, die mit Saugnäpfen, jeweils im indexierenden Wechsel von 180°, ein Produkt anheben und abwerfen. Die Schwenkbewegung wird hierdurch durch die Zentrifugalkraft bei der Bewegung um 180° limitiert. Es ist eine sehr engräumige Position zwischen Vereinzeln einer CD und Abwurf in die Weiterverarbeitung vorhanden. Materialpartikel auf der Fläche der Einrichtung zur Weiterförderung können eine Beschädigung der hochempfindlichen Datenträger nach sich ziehen.

Der Erfindung liegt daher die Aufgabe zugrunde, eine Vorrichtung der eingangs genannten Art zu schaffen, die mit hoher Geschwindigkeit arbeitet, d.h. pro Zeiteinheit eine Vielzahl von Datenträgern vereinzeln kann und gleichzeitig eine Beschädigung der Datenträgerseite vermeidet.

Diese Aufgabe wird durch das Kennzeichen des Anspruches 1 gelöst. Erfindungsgemäß wirken Ausleger und Schwenkarm zusammen, um das Vereinzeln so durchzuführen, daß nur die nicht mit dem Datenträger versehene Seite des scheibenförmigen Datenträgers berührt wird, d.h. mit Vorrichtungsbauteilen in Berührung gelangt. Weiterhin ist der Übergabeweg kurz und im wesentlichen gradlinig, so daß pro Zeiteinheit eine Vielzahl von Datenträgern vereinzelt werden können.

Die Saugnäpfe an dem Schwenkarm saugen den obenliegenden Datenträger in dem Stapel an und heben diesen ein sehr kurzes Stück durch die Schwenkbewegung des Schwenkarmes an, bis dieser Datenträger mit der angesaugten, nicht mit Daten versehenen Seite, in den Ansaugbereich der Förderbänder gelangt und von diesen angesaugt und abtransportiert werden kann.

In den Unteransprüchen sind vorteilhafte Ausgestaltungen unter Schutz gestellt.

Wenn die Vorrichtung so ausgebildet ist, wie in Anspruch 5 angegeben, dann wird der obenliegende Datenträger in seiner waagerechten Stellung angehoben, geringfügig aus der waagerechten Stellung herausgeschwenkt, bis er parallel zu dem entsprechend geneigten Ausleger liegt und von den mit Vakuum beaufschlagten Förderriemen erfaßt und abtransportiert werden kann.

Im folgenden wird die Erfindung unter Hinweis auf die Zeichnung anhand eines Ausführungsbeispieles näher erläutert.

Es zeigt:
- Fig. 1: eine Draufsicht auf eine Ausführungsform einer Vorrichtung nach der Erfindung;
- Fig. 2: eine Seitenansicht der Vorrichtung nach Fig. 1; und
- Fig. 3: eine Teilseitenansicht entsprechend derjenigen nach Fig. 2, jedoch in einer anderen Stellung des Schwenkarmes.

Die in der Zeichnung dargestellte Vorrichtung besteht aus zwei Haupteinheiten, nämlich dem Rundtisch 10 mit der Hubeinrichtung 11,12 einerseits und der Übergabevorrichtung andererseits, die im wesentlichen durch einen Ausleger 2 zwischen zwei Gußgehäusen 1 gebildet ist.

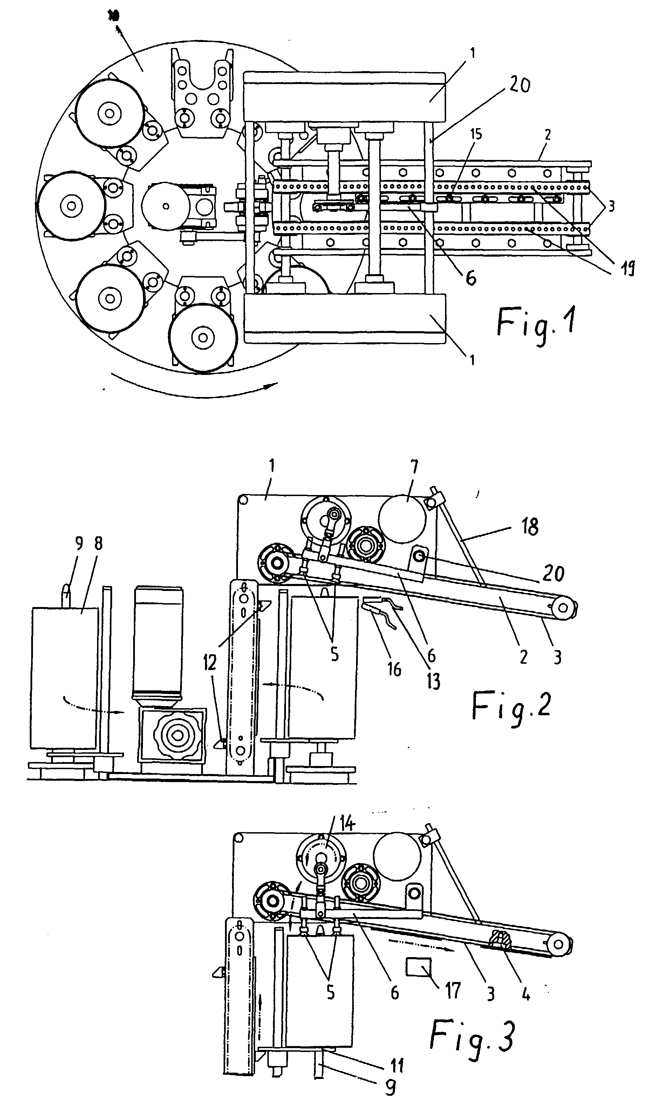

Der Ausleger 2 ist mit zwei endlosen, drehangetriebenen Förderriemen 3 ausgerüstet, die um gemeinsame Achsen in einer Ebene umlaufen. Diese Ebene ist geringfügig nach unten geneigt, wie es der Fig. 2 zu entnehmen ist. Die Drehrichtung der Förderriemen 3 ist so, wie strichpunktiert in Fig. 3 angedeutet. Die Förderriemen 3 sind mit einer Vielzahl von Öffnungen 19 versehen, die über Vakuumkammern 4 an der Unterseite des Auslegers bewegt werden. Die Vakuumkammern 4 sind in Reihe geschaltet und sie werden über Vakuumventile (nicht gezeigt) in Laufrichtung des Auslegers mit Vakuum beaufschlagt. Die Vakuumventile werden über Signalgeber 15 separat angesteuert. Der Antriebsmotor für die Förderriemen ist mit 7 bezeichnet. Mit Hilfe einer Stange 18 ist die Neigung des Auslegers 2 verstellbar.

Zwischen den Förderriemen 3 ist angrenzend an den Rundtisch 10 ein Schwenkarm 6 mit Saugnäpfen 5 angeordnet, die durch Vakuum beaufschlagt und durch Ventile (nicht gezeigt) gesteuert werden. Dieser Schwenkarm ist mit Hilfe eines Exzenters 14 um eine Achse 20 auf- und abbewegbar, und zwar zwischen den in den Fig. 2 und 3 erkennbaren Stellungen. An dem der Schwenkachse 20 abgelegenen Ende ist der Schwenkarm 6 mit zwei Saugnäpfen 5 ausgerüstet.

Auf dem Rundtisch sind nach Art einer Trommel mehrere Stapel 8 mit Datenträgern auf Produktstangen 9 angeordnet. Der zu vereinzelnde Stapel wird durch Drehen des Rundtisches in die Vereinzelungsstellung bewegt, in der er unter den Saugnäpfen 5 des Schwenkarmes 6 liegt. In dieser Stellung wird die Hubeinrichtung wirksam, die aus einer Hubgabel 11 und einem Paternoster mit zwei Mitnehmern 12 besteht. Die Mitnehmer 12 kommen abwechselnd zum Einsatz, um einen zu vereinzelnden Stapel 8 so anzuheben, daß der abzuhebende Datenträger immer auf dem gleichen Niveau liegt, das durch einen Signalgeber 13 erkannt und entsprechend angesteuert wird. Ein weiterer Signalgeber 16 zeigt an, wenn der Stapel geleert ist, so daß mit Hilfe des Rundtisches ein neuer Stapel in die Vereinzelungsposition gedreht werden kann. Unterhalb der Förderriemen 3 befindet sich eine Videokammer 17 zur Qualitätskontrolle.

Um eine Vereinzelung durchzuführen, wird der Schwenkarm 6 mit den durch Vakuum beaufschlagten Saugnäpfen 5 auf den Stapel 8 mit den zu vereinzelnden Datenträgern heruntergeschwenkt, so wie es in Fig. 3 dargestellt ist. Wenn dieser Datenträger an seiner nicht mit Daten versehenen Seite durch die Vakuum beaufschlagten Saugnäpfe 5 erfasst wurde, wird der Schwenkarm mit Hilfe des Exzenters 14 in die andere, oben liegende Stellung geschwenkt, die in Fig. 2 dargestellt ist. In dieser Stellung erfolgt die Übergabe an die Förderriemen 3, deren Öffnungen 19 in diesem Bereich durch die dort angeordnete Vakuumkammer 4 mit Vakuum beaufschlagt werden. In Fig. 3 ist lediglich eine Vakuumkammer 4 dargestellt. In Längsrichtung der Förderriemen befinden sich eine entsprechende Anzahl von Vakuumkammern 4, um die Übergabe und dann den Abtransport sicherzustellen. An der Unterseite der Förderriemen 3 gelangt diejenige Seite des Datenträgers zur Anlage, die nicht mit Daten versehen ist, d.h. diejenige, die vorher durch die Saugnäpfe angesaugt und abgehoben wurde. Eine Beschädigung der Daten kann daher nicht eintreten.

Die vereinzelten Datenträger werden durch die Förderriemen aus dem Vereinzelungsbereich herausgefördert und wunschgemäß abgelegt oder einer Verpackung zugeführt.

Durch die Neigung des Auslegers 2, die durch die Stange 18 verstellbar ist, ist sichergestellt, daß die Förderriemen im Bereich der Übergabe oder Vereinzelungsstation genau parallel zu dem geringfügig hochgeschwenkten und an den Saugnäpfen 5 befestigten Datenträger anliegen. Durch die Neigung des Auslegers 2 wird die Winkelbewegung des Schwenkarmes 6 aus der waagerechten Ansauglage in die geringfügig geneigte Übergabelage kompensiert.

Wenn der Signalgeber 16 anzeigt, daß ein Stapel 8 vollständig vereinzelt wurde, wird mit Hilfe des Rundtisches der nächste Stapel in die Vereinzelungsstellung bewegt und die Hubgabel 11 hebt die Datenträger mit Hilfe des anderen Mitnehmers 12 an. Der Verfahrensablauf beginnt von neuem.

Da die Datenträger mit ihrer mit den Daten versehenen Seite nach unten abgefördert werden, können sie durch die Videokamera 17 überwacht und auf ihre Qualität kontrolliert werden.

## Patentansprüche

1. Vorrichtung zum Vereinzeln von scheibenförmigen Datenträgern, insbesondere CD's, mit an einem Schwenkarm (6) angeordneten durch Vakuum beaufschlagten Saugnäpfen (5) zum Abheben des in einem Stapel (8) von zu vereinzelnden Datenträgern oben liegenden Datenträgers, dadurch gekennzeichnet, daß oberhalb des Stapels (8) der zu vereinzelnden Datenträger ein Ausleger (2) mit zwei parallellaufenden, mit Öffnungen (19) versehenen endlosen Förderriemen (3) und auf die Unterseite der Förderriemen gerichtete, auf der Förderlinie der Öffnungen (19) liegenden Vakuumkammern (4) vorgesehen sind, die separat mit Vakuum beaufschlagbar sind, und
daß der Schwenkarm (6) mit den Saugnäpfen (5) zwischen den Förderriemen (3) aus der Stellung, in der der anzuhebende, im Stapel (8) oben liegende Datenträger angesaugt und einer Stellung schwenkbar ist, in der der angehobene Datenträger mit seiner angesaugten, oben liegenden Seite an der Unterseite der Förderriemen (3) zur Anlage gelangt und durch diese durch Vakuumbeaufschlagung der Vakuumkammern (4) abtransportiert wird.

2. Vorrichtung nach Anspruch 1, dadurch gekennzeichnet, daß eine Hubeinrichtung (11,12) vorgesehen ist, um den Stapel (8) mit den zu vereinzelnden Datenträgern derart anzuheben, daß der obenliegende, zu vereinzelnde Datenträger auf dem Niveau der Saugnäpfe (5) in der Ansaugstellung liegt.

3. Vorrichtung nach Anspruch 2, dadurch gekennzeichnet, daß zur Steuerung der Hubeinrichtung (11,12) auf dem Ansaugniveau des obenliegenden Datenträgers ein Signalgeber (13) vorgesehen ist.

4. Vorrichtung nach Anspruch 2 oder 3, dadurch gekennzeichnet, daß zur Erkennung des Füllstandes des Stapels (8) der zu vereinzelnden Datenträger ein Signalgeber (16) vorgesehen ist.

5. Vorrichtung nach einem oder mehreren der vorstehenden Ansprüche, dadurch gekennzeichnet, daß der Ausleger (2) vom Übergabepunkt oberhalb des zu vereinzelnden Stapels (8) geringfügig nach unten geneigt ist, und daß der Schwenkarm (6) mit den Saugnäpfen (5) um einen Schwenkpunkt (20) in Förderrichtung von dem Übergabepunkt versetzt, aus einer im wesentlichen waagerechten Stellung in eine im wesentlichen parallel zu dem geringfügig nach unten geneigten Ausleger (2) schwenkbar ist.

6. Vorrichtung nach Anspruch 5, dadurch gekennzeichnet, daß der Ausleger (2) in seiner Neigung (bei 18) verstellbar ist.

7. Vorrichtung nach einem oder mehreren der vorstehenden Ansprüche, dadurch gekennzeichnet, daß im Förderbereich der Datenträger zwischen den Förderriemen (3) Signalgeber (15) zur Steuerung der Vakuumbeaufschlagung der Vakuumkammern (4) angeordnet sind.

8. Vorrichtung nach einem oder mehreren der vorstehenden Ansprüche, dadurch gekennzeichnet, daß unterhalb des Auslegers (2) im Bewegungsbereich der Förderriemen (3) eine Videokamera (17) zur Qualitätskontrolle der Datenträgerseite des vereinzelten Datenträgers vorgesehen ist.

9. Vorrichtung nach einem oder mehreren der vorstehenden Ansprüche, dadurch gekennzeichnet, daß mehrere Stapel 8 mit zu vereinzelnden Datenträgern auf einem Rundtisch (10) angeordnet und in die Vereinzelungsstellung unterhalb der Saugnäpfe (5) des Schwenkarmes (6) bewegbar sind.

## Claims

1. Apparatus for singling disk-like data carriers, particularly CD's, with vacuumized suction cups (5) placed on a swivel arm (6) for raising the top data carrier in a stack (8) of data carriers to be singled, characterized in that above the stack (8) of data carriers to be singled are provided a cantilever (2) with two parallel, continuous conveyor belts (3) provided with openings (19) and vacuum chambers (4) located on the conveying line of the openings (19) and directed onto the underside of the conveyor belt and which are separately vacuumizable and that the swivel arm (6) can be swivelled with the suction cups (5) between the conveyor belt (3) from the position in which suction is applied to the top data carrier to be raised from the stack (8) and a position in which the raised data carrier with its sucked, top side engages on the underside of the conveyor belt (3) and is conveyed away by the latter by vacuumizing the vacuum chambers (4).

2. Apparatus according to claim 1, characterized in that a lifting device (11, 12) is provided in order to raise the stack (8) with the data carriers to be singled in such a way that the top data carrier to be singled rests level with the suction cups (5) in the suction position.

3. Apparatus according to claim 2, characterized in that a signal generator (13) is provided at the suction level of the top data carrier for controlling the lifting device (11, 12).

4. Apparatus according to claim 2 or 3, characterized in that a signal generator (16) is provided for detecting the fill level of the stack (8) of data carriers to be singled.

5. Apparatus according to one or more of the preceding claims, characterized in that the cantilever (2) is slightly downwardly inclined from the transfer point above the stack (8) to be singled and that the swivel arm (6) with the suction cups (5) is displaced about a swivel point (20) away from the transfer point in the conveying direction and can be swivelled from a substantially horizontal position into a position substantially parallel to the slightly downwardly inclined cantilever (2).

6. Apparatus according to claim 5, characterized in that the inclination of the cantilever (2) is adjustable at (18).

7. Apparatus according to one or more of the preceding claims, characterized in that in the conveying area of the data carriers between the conveyor belts (3) are provided signal generators (15) for controlling the vacuumizing of the vacuum chambers (4).

8. Apparatus according to one or more of the preceding claims, characterized in that below the cantilever (2) in the movement area of the conveyor belt (3) is provided a video camera (17) for the quality control of the data carrier side of the singled data carrier.

9. Apparatus according to one or more of the preceding claims, characterized in that several stacks (8) with data carriers to be singled are placed on a round table (10) and movable into the singling position below the suction cups (5) of the swivel arm (6).

## Revendications

1. Dispositif pour séparer un par un des supports de données en forme de disque, en particulier des CD, avec des ventouses (5) placées sur un bras pivotant (6), chargées par le vide, pour soulever le support de données situé en haut sur un tas (8) de supports de données à séparer un par un, caractérisé en ce qu'il est prévu, au-dessus de la pile (8) de supports de données à séparer un par un, un bras (2) avec deux courroies de transport sans fin (3), de marche parallèle, pourvues d'ouvertures (19), et des chambres de vide (4) dirigées sur la face inférieure des courroies de transport, situées sur la ligne de transport des ouvertures (19), qui peuvent être chargées séparément avec du vide et que le bras pivotant (6) avec les ventouses (5) est pivotant entre les courroies de transport (3) de la position dans laquelle le support de données situé en haut sur le tas (8), qui doit être soulevé, est aspiré, à la position dans laquelle le support de données soulevé vient en appui sur la face inférieure des courroies de transport (3) avec sa face aspirée, située vers le haut, et est transporté par celles-ci par chargement par le vide vide des chambres de vide (4).

2. Dispositif selon la revendication 1, caractérisé en ce qu'un dispositif de levage (11, 12) est prévu pour soulever la pile (8) avec les supports de données à séparer un par un de telle manière que le support de données situé en haut, qui doit être séparé, se trouve au niveau des ventouses (5) dans la position d'aspiration.

3. Dispositif selon la revendication 2, caractérisé en ce qu'un transmetteur de signaux (13) est prévu pour la commande du dispositif de levage (11, 12) au niveau d'aspiration du support de données situé en haut.

4. Dispositif selon la revendication 2 ou 3, caractérisé en ce qu'un transmetteur de signaux (16) est prévu pour la reconnaissance du niveau de remplissage de la pile (8) des supports de données à séparer un par un.

5. Dispositif selon l'une ou plusieurs des revendications précédentes, caractérisé en ce que le bras (2) est légèrement incliné vers le bas du point de transfert au-dessus de la pile à séparer (8) et que le bras pivotant (6) avec les ventouses (5) est pivotant en étant déplacé autour d'un point de pivotement (20) dans le sens du transport du point de transport d'une position substantiellement horizontale dans une position substantiellement parallèle au bras légèrement incliné vers le bas (2).

6. Dispositif selon la revendication 5, caractérisé en ce que le bras (2) est ajustable quant à son inclinaison (en 18).

7. Dispositif selon l'une ou plusieurs des revendications précédentes, caractérisé en ce que des transmetteurs de signaux (15) pour la commande de la charge en vide des chambres de vide (4) sont placés dans la zone de transport des supports de données entre les courroies de transport (3).

8. Dispositif selon l'une ou plusieurs des revendications précédentes, caractérisé en ce qu'une caméra vidéo (17) pour le contrôle de la qualité de la face du support de données du support de données séparé est prévue au-dessous du bras (2) dans la zone de déplacement des courroies de transport (3).

9. Dispositif selon l'une ou plusieurs des revendications précédentes, caractérisé en ce que plusieurs piles (8) avec des supports de données à séparer un par un sont placées sur une table ronde (10) et peuvent être déplacées dans la position de séparation une par une au-dessous des ventouses (5) du bras pivotant (6).
